# EUROPÄISCHE PATENTSCHRIFT

(11) **EP 2 615 958 B1**
(45) Veröffentlichungstag und Bekanntmachung des Hinweises auf die Patenterteilung: **18.01.2017**
(21) Anmeldenummer: 11764085.4
(22) Anmeldetag: 23.08.2011
(51) Int. Cl.: A47L 9/20, B01D 46/00, A47L 9/22, A47L 5/22

(54) **FILTERABREINIGUNG FÜR SCHMUTZSAUGER MIT EXTERNEM GEBLÄSE**
FILTER CLEANING FOR VACUUM CLEANER WITH EXTERNAL FAN
NETTOYAGE DE FILTRE POUR ASPIRATEUR AVEC SOUFFLEUR EXTERNE

(30) Priorität: 18.09.2010 DE 102010045979
(43) Veröffentlichungstag der Anmeldung: 24.07.2013
(60) Teilanmeldung: 16002310.7
(73) Patentinhaber: Nilfisk A/S, 2605 Brøndby (DK)
(72) Erfinder: AMISANI, Gianni, I-40034 Castel d'Alano (BO) (IT); BONDIOLI, Cesare, I-41059 Zocca (MO) (IT); DE FALCO, Mauro, I-41054 Marano sul Panaro (MO) (IT)
(74) Vertreter: Riebling, Peter
(86) Internationale Anmeldenummer: PCT/EP2011/004228
(87) Internationale Veröffentlichungsnummer: WO 2012/034635

(56) Entgegenhaltungen:
- EP-A1- 0 955 003
- EP-A1- 1 997 415
- EP-A2- 1 629 762
- DE-A1- 10 101 219
- DE-C- 595 686
- DE-U1- 8 812 615

## Beschreibung

Gegenstand der Erfindung ist eine Filterabreinigung für Schmutzsauger mit einem externen Gebläse nach dem Oberbegriff des Patentanspruches 1.

Eine Filterabreinigung für Schmutzsauger nach dem Oberbegriff des Patentanspruches 1 ist mit der auf den gleichen Anmelder zurückgehenden deutschen Patentschrift DE 101 01 219 B4 bekannt geworden. Es wird auf den Offenbarungsinhalt dieser Patentschrift Bezug genommen. Dort wo gleiche Teile vorhanden sind, wurden auch gleiche Bezugszeichen verwendet, so dass im Hinblick auf die Funktion und den Steuerungsablauf der vorliegenden Erfindung auf den Offenbarungsinhalt der DE 1010 01 219 B4 verwiesen werden kann.

Bei der genannten Patentschrift ist ein einziger Ringfilter vorhanden, welcher durch einen Trennsteg in zwei unterschiedliche Filterhälften unterteilt ist. Die genannte Druckschrift lässt jedoch auch die Anordnung von mehr als einen Ringfilter mit dazugehörenden Trennstegen zu, so dass zwei oder mehrere Filter bereits schon aus dieser Druckschrift zu entnehmen sind.

Bei der genannten Druckschrift ist das Gebläse im Gehäuse des Schmutzsaugers angeordnet, was jedoch mit dem Nachteil verbunden ist, dass die Gebläseleistung stark begrenzt ist. Aus diesem Grund ist es mit der DE 101 01 219 B4 nicht möglich, Schmutzsauger mit wesentlich größeren Saugleistungen auszurüsten, weil - platzbegrenzend - das Gebläse im Schmutzsauger selbst angeordnet ist, und dies begrenzt die Saugleistung.

Weiterer Nachteil des dieser Patentschrift zugrunde liegenden Schmutzsaugers ist, dass ein Betrieb des Schmutzsaugers getrennt von seinem Gebläse nicht möglich ist. Es führte zu dem Nachteil, dass einerseits - wie oben ausgeführt - keine hohen Saugleistungen wegen des überdimensionierten Gebläses möglich sind und andererseits ein solcher Schmutzsauger nicht als Vorabscheider in stationären Gebläseanlagen verwendet werden kann.

Ein weiterer Nachteil besteht darin, dass eine unerwünscht hohe Geräuschentwicklung gegeben ist, weil das mit einem hochtourig laufenden Motor ausgerüstete Gebläse im Schmutzsaugergehäuse selbst angeordnet ist und hierdurch eine beträchtliche Schallentwicklung entsteht.

Weil bei der bekannten Patentschrift DE 101 01 219 B4 das Gebläse in den Schmutzsauger integriert ist, sind dort nur sogenannte Ringfilter möglich und nicht einzelne Filterpatronen, die separat in dem Schmutzsaugergehäuse angeordnet sind.

Deshalb hat das bekannte System den Nachteil, dass im Prinzip nur ein einziger Ringfilter, der durch einen Trennsteg in zwei Filterhälften abgeteilt ist, verwendet werden kann und nicht eine Mehrzahl von unterschiedlichen Filtern, die mit der bekannten Abreinigungssteuerung jeweils separat für sich abzureinigen sind.

Mit der EP 0 955 003 A1 wird ein Sauggerät offenbart, welches im Innenraum des Schmutzbehälters einen Saugmotor aufweist.

Die DE 88 12 615 U1 offenbart ein Absauggerät mit einem saugenden Ventilator, der die angesaugte Staubluft in einen mittleren Vorabscheider drückt. Die Filterreinigung erfolgt mit einer motorisch angetriebenen Reinigungsbürste.

Mit der EP 1 629 762 A2 wird ein Sauggerät mit mehreren Saugmotoren offenbart, welche die Luft über einen gemeinsamen Einlass in den Staubbehälter saugen. Jeder Motor ist mit einem eigenen Filter und einem Ventil an seinem Luftauslass ausgestattet, wodurch die Filterreinigung bei dem normalen Saugbetrieb stattfinden kann.

Die DE 595 686 A beschreibt einen Staubsauger mit einer Filterreinigungsvorrichtung. Im Bereich des Deckelgehäuses weist der Staubsauger eine Durchtrittsöffnung auf, über welche der darüber angeordnete Ventilator die Luft aus dem Gehäuse saugt.

Mit der EP 1 997 415 A1 wird ein Schmutzsauger mit zwei Filter n offenbart, welche in einem Schmutzsaugergehäuse angeordnet sind und mit einem Luftstrom eines Gebläses beaufschlagt sind. Der Schmutzsauger weist ferner Ventile zur getrennten Steuerung der Abreinigung der Filter auf, wobei im Normalbetrieb mindestens ein Filterteil von dem schmutzbehafteten Luftstrom von der Rohluftseite zur Reinluftseite durchsetzt ist. Jedem Filter ist ein Ventil zugeordnet, welches in der Reinigungsstellung umschaltet, wodurch bei dem jeweiligen Filter der Luftstrom umgekehrt wird und nun die an der Rohluftseite anhafteten Schmutzpartikel abreinigt.

Das Gebläse des Schmutzsaugers ist bei der EP 1 997 415 A1 außerhalb des Schmutzsaugergehäuse s angeordnet und direkt mit dem Gehäuse verbunden. Es liegt somit stets eine untrennbare Kombination aus Gebläse und Schmutzsauger bzw. Schmutzsaugergehäuse vor.

Dies hat den Nachteil, dass der Schmutzsauger relativ groß ausgebildet ist. Darüber hinaus ist durch die feste Verbindung kein modulares Austauschen des Gebläses möglich, wenn beispielsweise ein Gebläse mit einer stärkeren Leistung benötigt wird.

Der Erfindung liegt deshalb die Aufgabe zugrunde, eine Filterabreinigung mittels eines Luftstroms für einen Schmutzsauger der eingangs genannten Art so weiterzubilden, dass wesentlich höhere Saugleistungen möglich sind und der Bauraum für den Schmutzsauger hierdurch vermindert werden kann und im Übrigen eine geringere Geräuschentwicklung bei verbesserter Leistung gegeben ist.

Zur Lösung der gestellten Aufgabe ist die Erfindung durch die technische Lehre des Anspruches 1 gekennzeichnet..

Mit der gegebenen technischen Lehre ergibt sich der wesentliche Vorteil, dass nun ein oder mehrere Gebläse luftschlüssig mit dem Schmutzsauger verbunden werden können, wobei eine Schlauchverbindung zwischen dem einen oder mehreren Gebläsen und dem Schmutzsauger angeordnet ist.

Die Verwendung von mindestens einem Gebläse, welches extern von dem Schmutzsauger angeordnet ist, hat den Vorteil, dass der Schmutzsauger auch getrennt von dem Gebläse betrieben werden kann. Es ist dann nur über die besagten Schläuche mit dem Schmutzsauger verbunden. Einer mechanischen Befestigung am Gehäuse des Schmutzsaugers bedarf es dann nicht.

Zum Einen hat dies den Vorteil einer verbesserten Reparaturfreundlichkeit, denn der Schmutzsauger und dessen Einbauelemente können nun getrennt von Gebläseelementen ausgetauscht werden und zum Zweiten besteht der Vorteil, dass man die beiden Module, nämlich den Schmutzsauger als ein Modul und das Gebläse als das andere Modul, auf einem gemeinsamen Fahrgestell anordnen kann, um so einen Schmutzsauger mit überlegener Saugleistung zu schaffen.

Da man nicht mehr in Bezug auf den Bauraum des Schmutzsaugers auf das Volumen des eingebauten Gebläses angewiesen ist, ist es nun erstmals möglich, ein sehr starkes und großes Gebläse getrennt vom Schmutzsauger zu betreiben und - wie ausgeführt - auf dem Fahrgestell anzuordnen. Damit können nun erstmals Gebläse mit elektrischen Anschlusswerten von z. B. 5 kW bis 20 KW verwendet werden, wo hingegen bei einem Schmutzsauger nach der DE 101 01 219 B4 lediglich Anschlussleistungen in Höhe von etwa 2 bis 3 kW verwendet werden konnten.

Ein weiterer Vorteil der Anordnung des Gebläses des Schmutzsaugers ist darin zu sehen, dass nunmehr auch stationäre Gebläse verwendet werden können, die irgendwo in einem Gebäude fest angeordnet sind und von denen lediglich der Saug- und der Druckanschluss in einen Raum hineingeführt werden können, in dem der Schmutzsauger betrieben werden soll.

Auch hier besteht demzufolge der Vorteil, dass ein relativ kleiner Schmutzsauger - weil er gebläselos ist - mit einem externen, stationären Gebläse jeweils luftschlüssig auf der Saug- und Rückseite verbunden werden kann, um so eine sehr hohe Saugleistung zu erzielen.

Die getrennte Anordnung von Gebläse und Schmutzsauger hat den weiteren Vorteil, dass nun eine geringere Geräuschentwicklung gegeben ist, denn die separat verwendeten Gebläse können auch separat schallgedämpft werden und auch schwingungsgedämpft auf einer gemeinsamen Plattform mit dem Schmutzsauger angeordnet werden, so dass im Schmutzsauger selbst alle Schalldämmmaßnahmen entfallen können, mit Ausnahme eventuell vorhandener Ausblasfilter und dergleichen mehr.

Weiterer Vorteil der Erfindung ist darin zu sehen, dass wegen der Verringerung des Bauraumes in Bezug auf das fehlende Gebläse, im Schmutzsauger selbst es nun möglich ist, auf die relativ groß bauenden Ringfilter zu verzichten und stattdessen sogenannte Filterpatronen zu verwenden, die in einer Mehrzahl von mehr als zwei getrennt ansteuerbare n Filterpatronen im Schmutzsaugergehäuse angeordnet sind.

So können beispielsweise 2, 3 oder eine Vielzahl von getrennt ansteuerbare n Filterpatronen in dem Schmutzsaugergehäuse angeordnet werden, so dass jeweils ein oder mehrere Filterpatronen in der Abreinigungsstellung sind, während die anderen Filterpatronen in der Saug- (Arbeits-)-Stellung sind.

Dies ist ein wesentlicher Vorteil gegenüber dem Stand der Technik nach der DE 101 01 219 B4, weil dort stets nur ein einziger Ringfilter vorhanden ist, dessen Standzeit naturgemäß begrenzt ist und es wesentlich günstiger ist anstatt eines einzigen Ringfilters eine Vielzahl von Filterpatronen jeweils in eine Saug- oder Abreinigungsstellung zu bringen.

Deshalb wird die Lebensdauer eines solchen Schmutzsaugers mit einer beliebigen Anzahl von mehr als zwei darauf angeordneten Filterpatronen wesentlich verlängert, weil die Filterpatronen alle getrennt für sich abgereinigt werden können und auch entsprechend dem Verschleiß getrennt ausgewechselt werden können. Die Anmeldung soll jedoch nicht auf Filterpatronen beschränkt sein, ebenso sind z.B. Flachfilter möglich.

Im Folgenden wird die Erfindung anhand von mehrere Ausführungswege darstellenden Zeichnungen näher erläutert. Hierbei gehen aus den Zeichnungen und ihrer Beschreibung weitere erfindungswesentliche Merkmale und Vorteile der Erfindung hervor.

Es zeigen:
- Figur 1:: Schnitt durch einen Schmutzsauger mit zwei Filtern, wobei beide Filter in der Arbeitsstellung sind
- Figur 2:: gleicher Schnitt wie Figur 1, wobei das rechte Filter abgereinigt wird
- Figur 3:: eine gegenüber Figur 1 und 2 abgewandelte Ausführung eines Schmutzsaugers mit einer Ventilsteuerung, bei der die Ventilteller fest mit der jeweiligen Ventilstange verbunden sind, wobei die beiden Filter in der Arbeitsstellung sind
- Figur 4:: die gleiche Darstellung wie Figur 3 mit der Abreinigungsstellung des rechten Filters
- Figur 5:: schematisiert die Darstellung der getrennten Anordnung eines Schmutzsaugers von einem Gebläse
- Figur 6:: die Draufsicht auf eine gegenüber der Figur 5 abgewandelte Ausführungsform, bei der ein Schmutzsauger mit zwei Gebläsen im Parallelbetrieb betrieben wird
- Figur 7:: Schnitt durch einen Schmutzsauger mit zwei Filtern, wobei beide Filter als Flachfilter ausgebildet und in der Arbeitsstellung sind

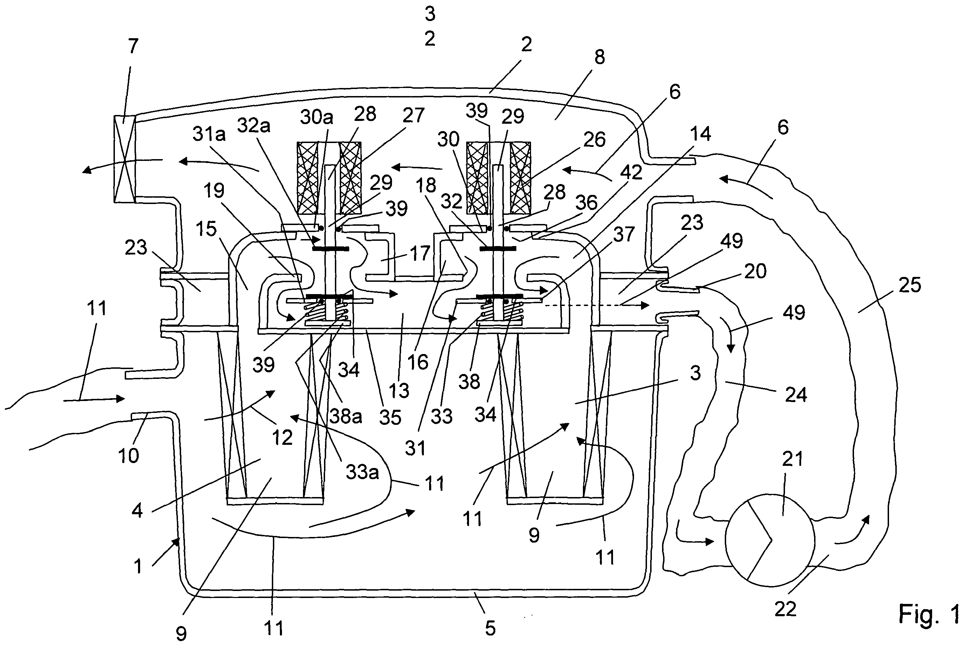

In Figur 1 ist allgemein ein Schmutzsaugergehäuse 1 dargestellt, welches einen Behälterboden 5 aufweist und nach oben durch einen Gehäusedeckel 2 abgeschlossen ist.

In dem Schmutzsaugergehäuse 1 sind zwei als Filterpatronen ausgebildete getrennte Filter 3, 4 angeordnet. Diese Filter 3, 4 können statt als Filterpatronen auch als getrennte Ringfilter ausgebildet sein.

Über einen Sauganschluss 10 wird die mit Schmutz beladene Saugluft in Pfeilrichtung 11 in den Innenraum des Schmutzsaugergehäuses 1 hineingesaugt und strömt in Pfeilrichtung 11 gegen die Außenseite der Filter 3, 4. Die Saugluft kann im Folgenden ebenso als Rohluft bezeichnet werden.

In dem Schmutzsaugergehäuse 1 ist ein Boden 35 angeordnet, der Teil einer Ventilsteuerung ist.

Der Boden 35 ist Teil einer Saugkammer 13, in dem die einander zugeordneten und parallel zueinander betriebenen Ventile angeordnet sind.

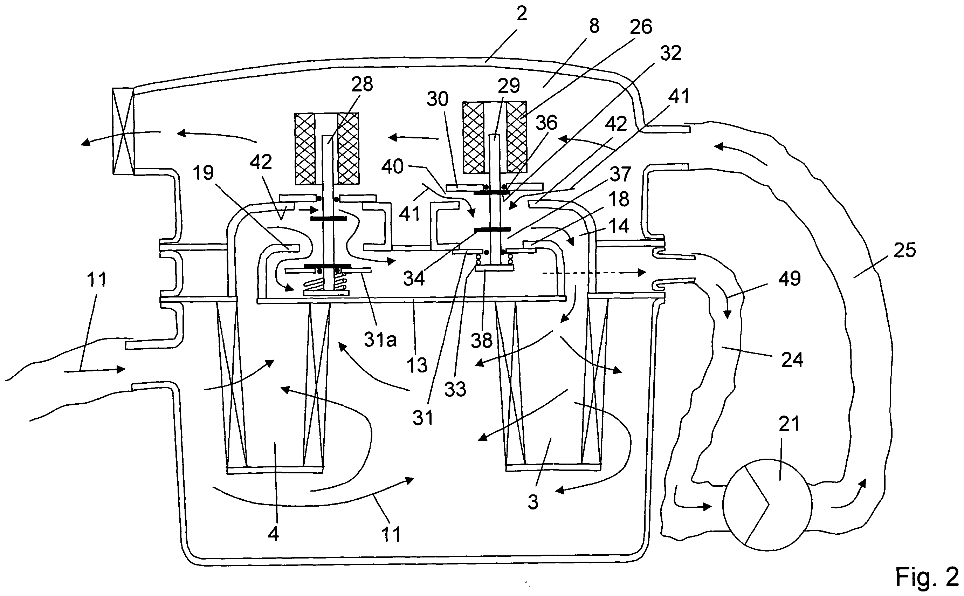

Nachdem die Filter 3, 4 und deren Ventilsteuerung genau gleich ausgebildet sind, reicht es an und für sich aus, lediglich die eine Seite der Figuren 1 und 2 zu beschreiben, weil die gegenüberliegende, spiegelsymmetrische Seite genau gleich ausgebildet ist.

Für die gleichen Teile wurden auch die gleichen Bezugszeichen verwendet, wobei teilweise bei Bezugnahme auf das linke oder rechte Filter der Buchstabe a noch zusätzlich verwendet wurde.

In Figur 1 ist die Arbeitsstellung erkennbar, die zeigt, dass durch den jeweiligen Filter 3, 4 die Saugluft in Pfeilrichtung 12 hindurchgesaugt wird und entsprechend gereinigt wird. Diese Luft gelangt in einen Einlasskanal 14, 15, wobei noch angefügt wird, dass der Innenraum des jeweiligen Filters 3, 4 als Filterkammer 9 bezeichnet wird, die jeweils luftschlüssig mit den Einlasskanälen 14, 15 verbunden ist.

Die Luft strömt somit in der gezeichneten Pfeilrichtung über die in Offenstellung gehaltenen Ventile in die Saugkammer 13 hinein, wobei die Saugkammer 13 luftschlüssig mit einer umlaufenden Ringkammer 23 verbunden ist, in welche die Luft hineinströmt, dort gesammelt wird und in Pfeilrichtung 49 eine Einlassöffnung 20 verlässt.

Die dort abgesaugte Reinluft wird über einen Schlauch 24 der Saugseite eines Gebläses 21 zugeführt, welches die Luft verdichtet und als Druckluft über einen Auslass 22 in einen Schlauch 25 einbläst, wo die Luft unter Überdruck in Pfeilrichtung 6 in einen Überdruckraum 8 im Bereich des Gehäusedeckels 2 hineinströmt.

Dort wird die Luft gesammelt und verlässt in der eingezeichneten Pfeilrichtung einen Ausblasfilter 7 und strömt in die Atmosphäre ab.

Wichtig ist nun, dass die Ventilsteuerung so ausgebildet ist, dass an einem Ventilsitz 18, 19 zunächst ein Ventilteller 31, 31 a vom Ventilsitz abgehoben ist, wobei eine dazugehörende Feder 33, 33a zusammengedrückt ist. Dies wird dadurch erreicht, dass zwei Hubmagnete 26, 27 stromlos sind und dazugehörende, von den Hubmagneten 26, 27 angesteuerte Ventilstangen 28, 29 allein durch das Eigengewicht der Ventilstange n 28, 29 und die Druckunterschiede zwischen Zwischenkammer n 16, 17 und der Saugkammer 13 in Offenstellung gehalten werden, wobei die Feder n 33, 33a noch nicht gespannt sind. Es ist ein auf der jeweiligen Ventilstange 28, 29 mit Hilfe von Dichtungen 39 verschiebbarer Ventilteller 31, 31 a vorhanden, der in der in Figur 1 dargestellten Stellung von dem Ventilsitz 18, 19 abgehoben ist.

Gleichzeitig ist in der in Figur 1 eingezeichneten Stellung ein oberer Ventilteller 30, 30a, der ebenfalls über eine Dichtung 39 gleitend auf der Ventilstange 28, 29 aufsitzt und dort verschiebbar ist, in Schließstellung, weil er auf einem Ventilsitz 42 dichtend aufsitzt.

Diese Schließstellung erfolgt allein durch den Druckunterschied zwischen dem Überdruckraum 8 und der Saugkammer 13, so dass also die genannten Ventilteller 30, 30a, 31, 31a selbsttätig durch den angelegten Unterdruck in der Arbeitsstellung gehalten werden.

Fest mit der jeweiligen Ventilstange 28, 29 verbundene Mitnehmerscheiben 32, 32a haben in der in Figur 1 dargestellten Stellung noch keine Funktion.

Kommt es jedoch zu einer Abreinigung des rechten Filtern 3 nach Figur 2, während der linke Filter 4 in seiner Arbeitsstellung bleibt, geschieht Folgendes:
Durch die Betätigung des Hubmagneten 26 wird die Ventilstange 29 angehoben, und eine untere Anschlagscheibe 38 komprimiert die Feder 33, wodurch der Ventilteller 31 an den Ventilsitz 18 angepresst wird.

Damit wird der Einlasskanal 14 verschlossen, dadurch steigt der Unterdruck im Einlasskanal 14, die Ventilstange 29 fährt weiter in vertikaler Richtung nach oben, komprimiert die Feder 33, und die Mitnehmerscheibe 32 nimmt den Ventilteller 30 auf seinem Gleitsitz nach oben auf der Ventilstange 29 mit, und somit wird der Ventilsitz 42 geöffnet und Spülluft strömt in Pfeilrichtung 41 in den Einlasskanal 14 und strömt dort direkt in den Innenraum (Filterkammer 9) des Filters 3 wo sie unter Überdruck den Filter durchströmt und die an der Außenseite des Filters 3 anhaftenden Schmutzpartikel absprengt und in dem Innenraum des Schmutzsaugergehäuses zur Ablage am Behälterboden 5 bringt.

Hierbei ist der linke Filter 4 nach wie vor in der Arbeitsstellung, d. h. die Luftführung entspricht genau der in Figur 1 dargestellten. Dies bedeutet, dass die Spülluft in Pfeilrichtung 41 ebenso abgeführt wird und von dem Filter 4 angesaugt wird und über den offenen Ventilteller 31a in die Saugkammer 13 gelangt, von dort aus in die Ringkammer 23 hineinläuft und in Pfeilrichtung 49 in den Ansaugschlauch 24 gelangt, wo sie von dem Gebläse 21 angesaugt und verdichtet wird.

In der Arbeitsstellung nach Figur 1 ist erkennbar, dass ein Abstand 37 zwischen der Anschlagscheibe 34 und dem Ventilteller 31 auf 0 gestellt ist, während in der gleichen Situation nach Figur 1 ein Abstand 36 zwischen der Mitnehmerscheibe 32 und dem Ventilsitz 42 vorhanden ist.

In der Abreinigungsstellung nach Figur 2 ist hierbei erkennbar, dass nunmehr der Abstand 37 eine bestimmte Größe hat und umgekehrt der Abstand 36 auf 0 gestellt ist.

Beim Umstellen der dargestellten Ventilteller 30, 31 gelangt somit die Spülluft bzw. Reinluft schlagartig in eine Spülöffnung 40 und durchströmt in Pfeilrichtung 41 den Filter 3.

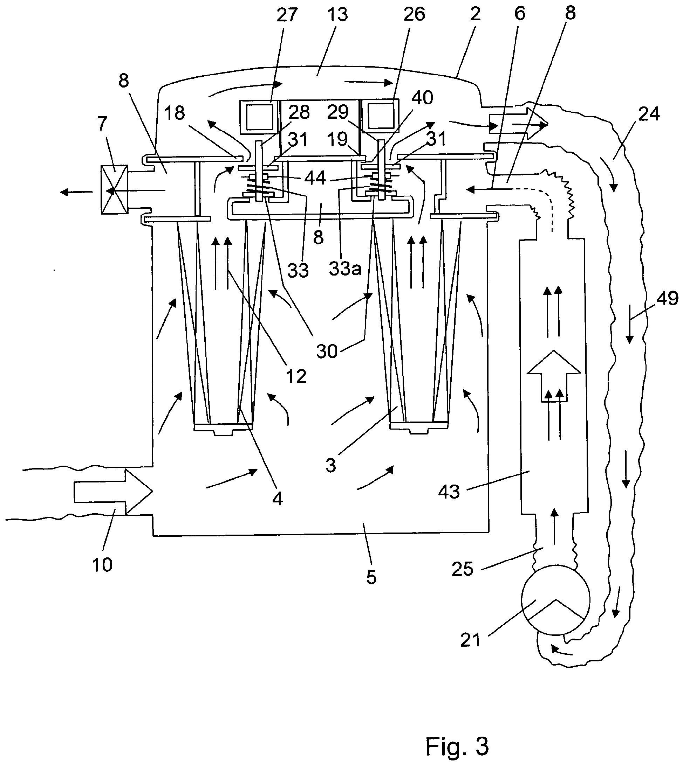

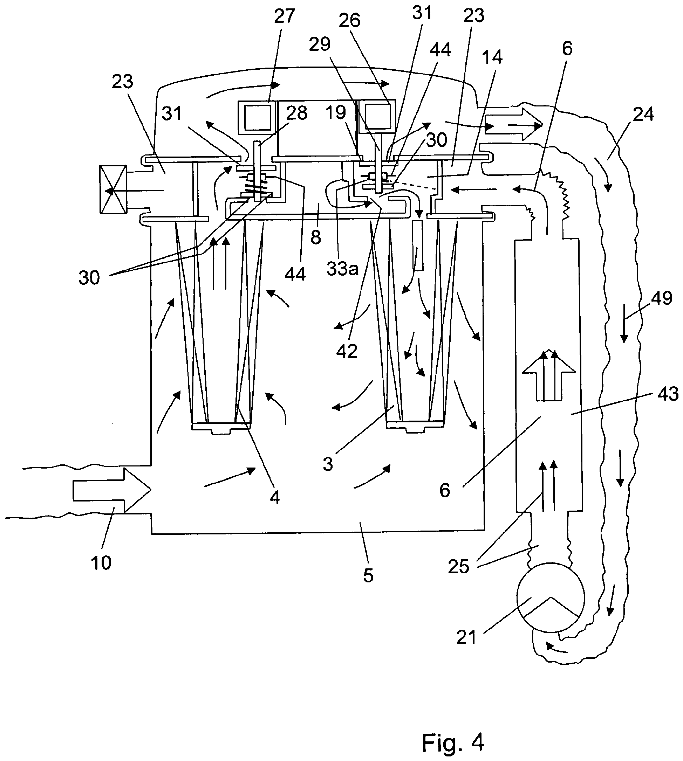

In den Figuren 3 und 4 wird nun als weiteres Ausführungsbeispiel dargestellt, dass es auch möglich ist, die Saug- und Druckseite der Anschlüsse des Gebläses 21 an das Schmutzsaugergehäuse 1 zu vertauschen, weil eine andere Ventiltellersteuerung vorhanden ist.

Die in den Figuren 3 und 4 gezeigten Ventile sind mit festen mit jeweils der Ventilstange 28, 29 verbundenen Ventiltellern 30, 31 verbunden.

Der Vorteil dieser Maßnahme ist, dass auf Gleitdichtungen und Verschiebeführungen verzichtet werden kann, wie dies sich aus den Figuren 3 und 4 ergibt. Konsequenz hierfür ist, dass nun die von dem Gebläse 21 verdichtete Druckluft über den Schlauch 25 über zunächst einen Schalldämpfer 43 in das Gehäuse eingeführt wird, wobei die Druckkammer 8 nun eine andere Formgebung hat als vergleichsweise in den Figuren 1, 2.

Ansonsten gelten für die gleichen Teile die gleichen Bezugszeichen, wobei aus Figuren 3 und 4 erkennbar ist, dass nun die Luft, die in Pfeilrichtung 6 in die Druckkammer 8 strömt, als Ausblasluft über den Überdruckraum 8 und das Ausblasfilter 7 in die Atmosphäre gelangt.

Die von dem Gebläse 21 erzeugte Saugluft wird wieder über den Sauganschluss 10 in den Innenraum des Schmutzsaugergehäuses 1 gesaugt und beaufschlagt die Filter 3, 4 von ihrer Außenseite her.

Im Unterschied zu der Darstellung in den Figuren 1 und 2 sind jedoch die Saug- und Druckanschlüsse des Gebläses 21 gegeneinander getauscht, weil die Saugluft, die in Pfeilrichtung 12 durch den Innenraum der Filter 3, 4 strömt, durch die nunmehr in Figur 3 von den Ventilsitzen 18 abgehobenen Ventilteller 31 in die obere Saugkammer 13 strömt und in Pfeilrichtung 49 von dem Schlauch 24 angesaugt und der Saugseite des Gebläses 21 zugeführt wird.

In der gezeichneten Stellung nach Figur 3 ist der untere Ventilteller 30 in Schließstellung und wird in Schließstellung von der Feder 33 gehalten, die an einem gehäusefesten Anschlag 44 anliegt und sich dort abstützt.

Dies ist notwendig, weil im Druckraum 8 Überdruck vorhanden ist und die Feder die Öffnungsstellung in Figur 3 herbeiführen muss.

Die Hubmagnete 26, 27 sind in der in Figur 3 gezeigten Stellung nicht angesteuert und beaufschlagt.

Soll hingegen z. B. das rechte Filter 3 nach Figur 4 abgereinigt werden, wird der Hubmagnet 26 beaufschlagt, und die Ventilstange 29 wird angehoben, wodurch der untere Ventilteller 30 von dem unteren Ventilsitz 42 abhebt. Dadurch kann Spülluft aus dem Überdruckraum 8 in den nunmehr offenen Einlasskanal 14 strömen und in die Filterkammer 9 des Filters 3 einströmen.

Hierbei wird vorausgesetzt, dass der Ventilteller 31 an dem oberen Ventilsitz 19 anliegt und diese Öffnung verschließt.

In dem Augenblick, in dem der untere Ventilsitz 42 geöffnet wird, ist allerdings der obere Ventilsitz 19 noch nicht verschlossen. Dies definiert eine Zwischenstellung, die jedoch für die Abreinigung unschädlich ist, weil kurz danach der eine Ventilsitz 19 schließt und der andere Ventilsitz 42 geöffnet ist und hierdurch dann der Filter 3 wirksam abgereinigt wird.

Die Figuren 3 und 4 zeigen also bezüglich der Ventile eine vereinfachte Ventilausführung.

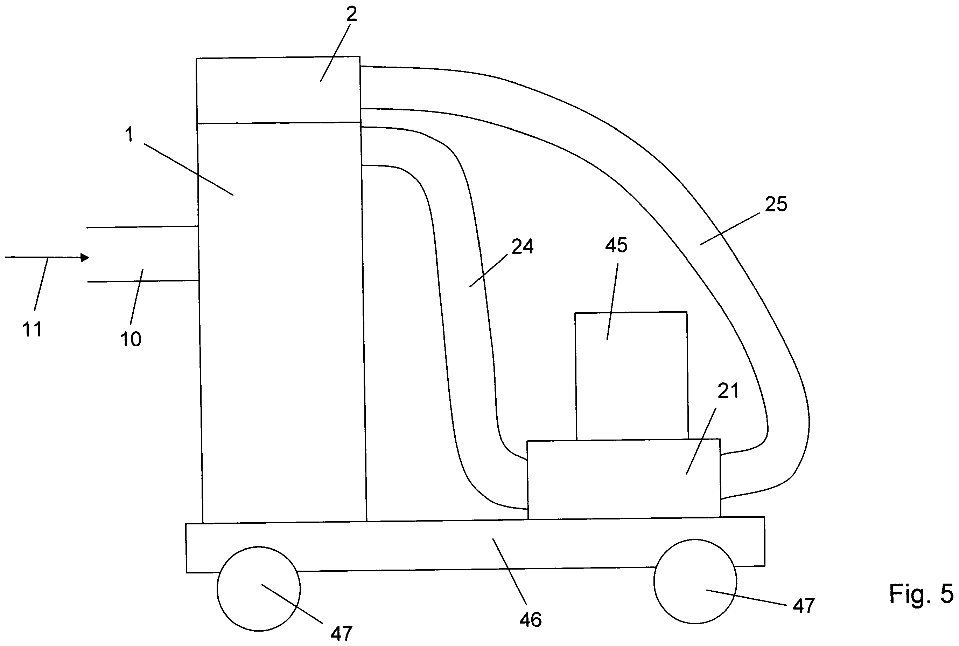

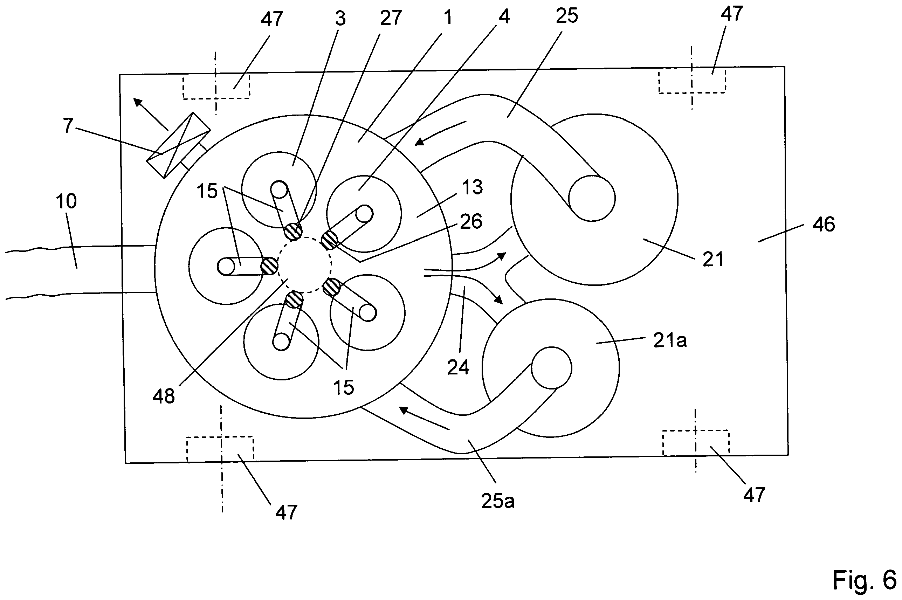

In einer weiteren Ausführungsform ist die Feder 33 im oberen Bereich des Stößels 28 oder innerhalb der Magnetventile 26 und 27 angeordnet. Die Figuren 5 und 6 zeigen als Ausführungsbeispiel, wie ein Schmutzsaugergehäuse 1 auf einem Fahrgestell 46 zusammen mit einem getrennt davon ausgebildeten Gebläse 21 angeordnet sein kann.

Das Fahrgestell 46 weist Räder 47 auf, mit denen es fahrbar ausgebildet ist.

Während die Figur 5 die Verwendung eines einzigen Gebläses 21 zeigt, welches in an sich bekannter Weise von einem Motor 45 angetrieben ist, zeigt die Figur 6, dass es auch möglich ist, mehrere Gebläse 21, 21a parallel zueinander zu betreiben.

Hierbei gibt es ein Gebläse 21a zusätzlich zu einem Gebläse 21, und die beiden Gebläse 21, 21a erzeugen jeweils Überdruckluft, die über die Schläuche 25, 25a dem einzigen Schmutzsaugergehäuse 1 zugeführt wird.

Dort ist erkennbar, dass im Schmutzsaugergehäuse eine Anzahl von fünf Filtern angeordnet sind, wobei lediglich die Filter 3, 4 bezeichnet sind, weil die anderen drei verbleibenden Filter genau identisch ausgebildet sind.

Jedes Filter ist mit einem zugeordneten Hubmagneten 26 oder 27 ansteuerbar, und je nach Ansteuerstellung werden ein oder mehrere Filter 3 in Arbeitsstellung und ein oder mehrere Filter in Abreinigungsstellung gehalten. Die aus dem Schmutzsaugergehäuse 1 abgesaugte Saugluft wird über eine verzweigte Schlauch- oder Rohrleitung der Saugseite der jeweiligen Gebläse 21 a, 21 zugeführt.

Es ist aus Figur 6 noch zu entnehmen, dass die einzelnen, ringförmig und gleichmäßig am Umfang verteilt angeordneten Hubmagnete an einer zentralen Befestigung 48 am Schmutzsaugergehäuse 1 befestigt sind.

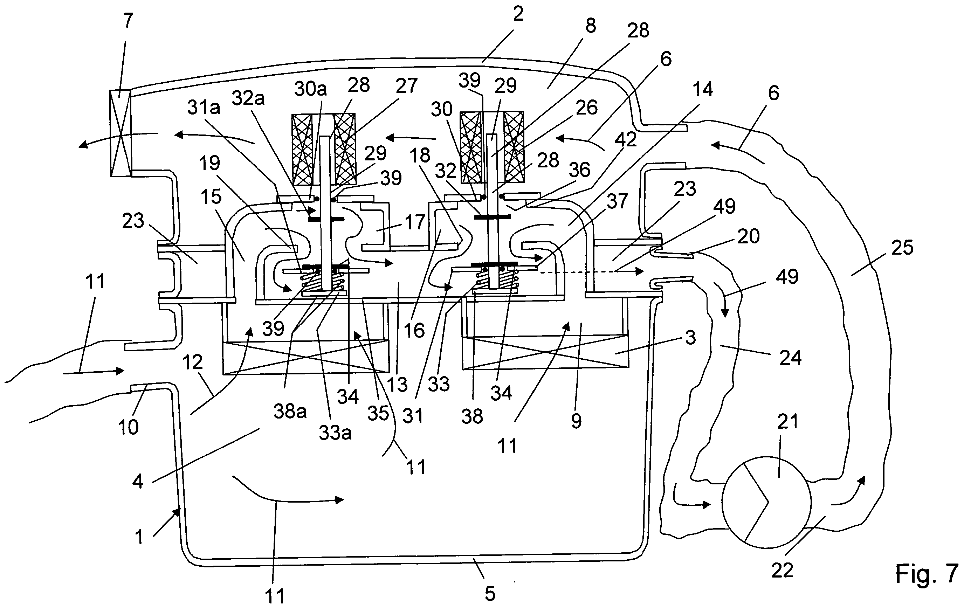

Mit der Figur 7 wird eine bevorzugte Ausführungsform des Schmutzsaugergehäuses 1 mit mindestens zwei Filtern dargestellt. Als Besonderheit bei dieser Ausführungsform wird als Filter 3, 4 je ein Flachfilter eingesetzt, welcher in dem Schmutzsaugergehäuse getrennt angeordnet ist.

Als Flachfilter kann hier beispielsweise ein Papierfilter, ein Kohlefilter, ein Polyester-Vlies oder dergleichen zum Einsatz kommen. Die Erfindung soll jedoch nicht auf diese Filter- Ausführungsformen beschränkt sein.

### Zeichnungslegende

- 1: Schmutzsaugergehäuse
- 2: Gehäusedeckel
- 3: Filter
- 4: Filter
- 5: Behälterboden
- 6: Pfeilrichtung
- 7: Ausblasfilter
- 8: Überdruckraum
- 9: Filterkammer
- 10: Sauganschluss
- 11: Pfeilrichtung
- 12: Pfeilrichtung
- 13: Saugkammer (verbunden mit 23)
- 14: Einlasskanal
- 15: Einlasskanal
- 16: Zwischenkammer
- 17: Zwischenkammer
- 18: Ventilsitz
- 19: Ventilsitz
- 20: Einlassöffnung
- 21: Gebläse
- 22: Auslass
- 23: Ringkammer (Unterdruckraum)
- 24: Schlauch
- 25: Schlauch
- 26: Hubmagnet
- 27: Hubmagnet
- 28: Ventilstange
- 29: Ventilstange
- 30: Ventilteller 30a
- 31: Ventilteller 31 a
- 32: Mitnehmerscheibe 32a
- 33: Feder33a
- 34: Anschlussscheibe
- 35: Boden
- 36: Abstand
- 37: Abstand
- 38: Anschlagscheibe 38a
- 39: Dichtung
- 40: Spülöffnung
- 41: Pfeilrichtung
- 42: Ventilsitz
- 43: Schalldämpfer
- 44: Anschlag
- 45: Motor
- 46: Fahrgestell
- 47: Rad
- 48: Befestigung
- 49: Pfeilrichtung

## Patentansprüche

1. Schmutzsauger mit mindestens zwei Filtern (3, 4), welche an oder in einem Schmutzsaugergehäuse (1) angeordnet sind und mit einem Luftstrom mindestens eines Gebläses (21, 21a) beaufschlagbar sind, und welche Ventile (30, 31, 30a, 31 a) zur getrennten Steuerung der Abreinigung der Filter (3, 4) aufweisen, wobei im Normalbetrieb mindestens einer der Filter (3, 4) von dem schmutzbehafteten Luftstrom von der Rohluftseite zur Reinluftseite durchsetzt ist, und jedem der mindestens zwei Filter (3, 4) mindestens eines der Ventile zugeordnet ist, welches in der Reinigungsstellung umschaltet, wodurch bei dem jeweiligen Filter (3 oder 4) der Luftstrom umgekehrt wird und die an der Rohluftseite anhafteten Schmutzpartikel abreinigt, wobei das mindestens eine Gebläse (21, 21a) des Schmutzsaugers außerhalb des Schmutzsaugergehäuses (1) angeordnet ist;
**dadurch gekennzeichnet, dass**
das mindestens eine Gebläse (21, 21a) getrennt und außerhalb des Schmutzsaugergehäuses (1) angeordnet ist und luftschlüssig über eine Schlauchverbindung (24, 25) saug- und druckseitig mit dem Schmutzsaugergehäuse (1) verbunden ist.

2. Schmutzsauger nach Anspruch 1, **dadurch gekennzeichnet, dass** das Schmutzsaugergehäuse (1) auf einem Fahrgestell (46) zusammen mit dem getrennt davon ausgebildeten Gebläse (21, 21 a) angeordnet ist.

3. Schmutzsauger nach den Ansprüchen 1 bis 2, **dadurch gekennzeichnet, dass** das Schmutzsaugergehäuse (1) an ein stationäres Gebläse (21) anschließbar ist.

4. Schmutzsauger nach den Ansprüchen 1 bis 3, **dadurch gekennzeichnet, dass** das Gebläse (21) verdichtete Druckluft über einen Schalldämpfer (43) dem Schmutzsaugergehäuse (1) zuführt.

5. Schmutzsauger nach den Ansprüchen 1 bis 4, **dadurch gekennzeichnet, dass** die mit Schmutz beladene Saugluft über einen Sauganschluss (10) in den Innenraum des Schmutzsaugergehäuses (1) einsaugbar ist.

6. Schmutzsauger nach einem der Ansprüche 1 bis 5, **dadurch gekennzeichnet, dass** als Filter (3, 4) mindestens eine Filterpatrone oder mindestens ein Flachfilter angeordnet ist.

7. Schmutzsauger nach einem der Ansprüche 1 bis 6, **dadurch gekennzeichnet, dass** der Schmutzsauger mit mindestens zwei Gebläsen (21, 21 a) verbunden ist.

8. Schmutzsauger nach einem der Ansprüche 1 bis 7, **dadurch gekennzeichnet, dass** das Gebläse (21) und ein zusätzliches Gebläse (21a) parallel betreibbar sind und die erzeugte Überdruckluft über die Schläuche (25, 25a) dem Schmutzsaugergehäuse (1) zuführen.

## Claims

1. Vacuum cleaner with at least two filters (3, 4) which are arranged on or in a vacuum cleaner housing (1) and can be subjected to the action of a stream of air from at least one fan (21, 21a) and which have valves (30, 31, 30a, 31a) for separate control of the cleaning of the filters (3, 4), wherein in normal operation the stream of air laden with dirt is passed through at least one of the filters (3, 4) from the uncleaned air side to the cleaned air side, and each of the at least two filters (3, 4) is associated with at least one of the valves which switches over in the cleaning position, through which the stream of air at the respective filter (3 or 4) is reversed and removes the dirt particles adhering on the uncleaned air side, wherein the at least one fan (21, 21a) of the vacuum cleaner is arranged outside the vacuum cleaner housing (1),
**characterised in that**
the at least one fan (21, 21a) is separate and arranged outside the vacuum cleaner housing (1) and is connected in airtight fashion to the vacuum cleaner housing (1) by means of a hose connection (24, 25) on the suction and the high pressure side.

2. Vacuum cleaner according to claim 1, **characterised in that** the vacuum cleaner housing (1) is arranged on a wheeled chassis (46) together with the fan (21, 21 a) formed separately from it.

3. Vacuum cleaner according to claims 1 to 2, **characterised in that** the vacuum cleaner housing (1) can be connected to a stationary fan (21).

4. Vacuum cleaner according to claims 1 to 3, **characterised in that** the fan (21) supplies compressed high pressure air to the vacuum cleaner housing (1) through a silencer (43).

5. Vacuum cleaner according to claims 1 to 4, **characterised in that** the suction air laden with dirt can be sucked into the interior of the vacuum cleaner housing (1) through a suction connection (10).

6. Vacuum cleaner according to one of claims 1 to 5, **characterised in that** at least one filter cartridge or at least one flat filter is arranged as filter (3,4).

7. Vacuum cleaner according to one of claims 1 to 6, **characterised in that** the vacuum cleaner is connected with at least two fans (21, 21a).

8. Vacuum cleaner according to one of claims 1 to 7, **characterised in that** the fan (21) and an additional fan (21a) can be operated in parallel and supply the high pressure air produced to the vacuum cleaner housing (1) through the hoses (25, 25a).

## Revendications

1. Aspirateur avec au moins deux filtres (3, 4) qui sont disposés sur ou dans un boîtier d'aspirateur (1), qui sont aptes à être sollicités par un courant d'air d'au moins une soufflante (21, 21a), et qui comportent des soupapes (30, 31, 30a, 31a) pour une commande séparée du dépoussiérage des filtres (3, 4), l'un au moins des filtres (3, 4), en fonctionnement normal, étant traversé du côté air brut jusqu'au côté air pur par le courant d'air chargé de saletés, et l'une au moins des soupapes étant associée à chacun des deux filtres (3, 4) et changeant de position, dans la position de nettoyage, moyennant quoi le courant d'air est inversé au niveau du filtre correspondant (3 ou 4) et élimine les particules de saletés qui se trouvent côté air brut, la ou les soufflantes (21, 21a) de l'aspirateur étant disposées à l'extérieur du boîtier d'aspirateur (1),
**caractérisé en ce que** la ou les soufflantes (21, 21a) sont disposées séparément et à l'extérieur du boîtier d'aspirateur (1) et sont reliées de manière étanche à l'air par l'intermédiaire d'une liaison par tuyau (24, 25), côté aspiration et côté refoulement, au boîtier d'aspirateur (1).

2. Aspirateur selon la revendication 1, **caractérisé en ce que** le boîtier d'aspirateur (1) est disposé, avec la soufflante (21, 21a) séparée, sur un châssis roulant (46).

3. Aspirateur selon les revendications 1 à 2, **caractérisé en ce que** le boîtier d'aspirateur (1) est apte à être raccordé à une soufflante stationnaire (21).

4. Aspirateur selon les revendications 1 à 3, **caractérisé en ce que** la soufflante (21) amène de l'air comprimé dans le boîtier d'aspirateur (1), par l'intermédiaire d'un silencieux (43).

5. Aspirateur selon les revendications 1 à 4, **caractérisé en ce que** l'air d'aspiration chargé de saletés est apte à être aspiré et amené à l'intérieur du boîtier d'aspirateur (1) par l'intermédiaire d'un raccord d'aspiration (10).

6. Aspirateur selon l'une des revendications 1 à 5, **caractérisé en ce qu'**au moins une cartouche filtrante ou au moins un filtre plat est prévu comme filtre (3, 4).

7. Aspirateur selon l'une des revendications 1 à 6, **caractérisé en ce que** l'aspirateur est relié à au moins deux soufflantes (21, 21a).

8. Aspirateur selon l'une des revendications 1 à 7, **caractérisé en ce que** la soufflante (21) et une soufflante supplémentaire (21a) sont aptes à fonctionner parallèlement, et amènent dans le boîtier d'aspirateur (1), par l'intermédiaire des tuyaux (25, 25a), l'air surcomprimé produit.
